# EUROPEAN PATENT APPLICATION

(11) **EP 3 098 008 A1**
(43) Date of publication of application: **30.11.2016**
(21) Application number: 15169984.0
(22) Date of filing: 29.05.2015
(51) Int. Cl.: B23D 57/00, B28D 5/04

(54) **METHOD OF DISPOSING A CUTTING WIRE**

(71) Applicant: Meyer Burger AG, 3645 Gwatt (Thun) (CH)
(72) Inventor: Boyon, Fernando, 3600 Thun (CH)
(74) Representative: Patentbüro Paul Rosenich AG

(57) **Abstract**

The invention relates to a method of disposing a cutting wire (4) in multiple loops over at least two rotatable wire guide rollers (2, 3) of a wire saw (1), wherein a wire web is formed, and wherein the cutting wire (4) runs within grooves (9) formed on the wire guide rollers (2, 3), comprising the steps of:
(a) winding up the cutting wire (4) on the wire guide rollers (2, 3) until a wire web portion (W0) is formed;
(b) forming a gap (G) in the wire web portion (W0), wherein the gap (G) is greater than the distance between two neighboring grooves (9) of a wire guide roller (2, 3);
(c) subsequent to step (b): further winding up the cutting wire (4) by rotating the wire guide rollers (2, 3).

## Description

The invention relates to a method of disposing a cutting wire in multiple loops over at least two rotatable wire guide rollers of a wire saw.

With the cutting wire web of a wire saw usually 1 to 5 bricks are cut simultaneously. Wire sections located at the edges of the bricks are stressed to a greater extent than other wire sections. They may be damaged (even resulting in wire breaks) due to the fact that the outermost wafers cut from the bricks break away. It is therefore preferred to split the wire web into wire web portions that are distanced by a gap that is greater than the usual distance between two neighboring wire sections or wire guiding grooves of the wire guide rollers. In this way the outermost wafers become thicker and thus more stable.

A wire web means a set of adjacent wire segments extending between two wire guide rollers.

Disposing the cutting wire on the wire guide rollers is a difficult process. Forming gaps in the wire web is likewise a complicated procedure.

The object of the invention is to overcome these problems and to provide a method of disposing a cutting wire in multiple loops over at least two rotatable wire guide rollers, wherein a gap is formed in the wire web. The method should be fast and reliable. Damages of the cutting wire should be avoided.

The object is achieved by a method of disposing a cutting wire in multiple loops over at least two rotatable wire guide rollers of a wire saw, wherein a wire web is formed, and wherein the cutting wire runs within grooves formed on the wire guide rollers, the method comprising the steps of:
(a) winding up the cutting wire on the wire guide rollers, preferably by rotating the wire guide rollers, until a wire web portion is formed;
(b) forming a gap in the wire web portion, wherein the gap is greater than the distance between two neighboring grooves of a wire guide roller, wherein step (b) comprises a step (b1) of transferring at least two neighboring wire sections, that run along each other, wherein each of the at least two neighboring wire sections (4', 4", 4"') is transferred from its actual groove in the first wire guide roller into another groove in the first wire guide roller and a step (b2) of transferring at least one wire section from its actual groove in the second wire guide roller into another groove in the second wire guide roller, such that the gap is formed between the transferred wire sections and the wire sections remaining in their grooves;
(c) subsequent to step (b): further winding up the cutting wire by rotating the wire guide rollers;
wherein step (b1) comprises: deflecting simultaneously the at least two neighboring wire sections in a deflection direction that has a directional component extending parallel to the rotation axes of the wire guide rollers, and rotating the wire guide rollers, such that the at least two deflected wire sections move into the other grooves of the first wire guide roller.

'Such that the gap is formed between the transferred wire sections and the wire sections remaining in their grooves' means that the gap extends between the edge section of the transferred sections and the edge section of the wire sections not transferred in step (b).

In step (b1) and step (b2) it would be possible that (at least) one of the wire sections is transferred into a groove in which formerly (i.e. before step (b1) or step (b2)) another transferred wire section was accommodated. However, it would be also possible that all transferred wire sections have been transferred to grooves that formerly (i.e. before step (b1) or step (b2)) have been free. In the latter case the transferred wire field is broader than the resulting gap.

With such a method the gap is formed during disposing the cutting wire over the wire guide rollers. The gap is formed after a first portion of the cutting wire has been wound onto the wire guide rollers and prior to winding up a second portion of the cutting wire onto the wire guide rollers. The forming of the gap is further improved by the fact that at least two neighboring wire sections are deflected simultaneously in the deflection direction. Thus according to the invention two or more wire sections are transferred at the same time and in one step. This allows a time-saving and reliable process.

Step (b1) may be performed prior to step (b2). But it would be of course possible to perform step (b2) prior to step (b1). Another possibility would be to perform steps (b1) and (b2) overlapping in time.

Prior to step (b1) and/or prior to step (b2) the movement of the wire guide rollers is stopped. The movement of the wire guide rollers continues not until the wire sections have been deflected.

Preferably, the movement continues thereby rotating the wire guide rollers at least over 180°.

When deflecting the at least two neighboring wire sections simultaneously, their relative distance is kept essentially constant, at least where the transferring tool engages the wire sections that are transferred.

It is preferred that the at least one wire section transferred in step (b2) is one of the at least two wire segments transferred in step (b1).

It is noted that one of the at least two wire sections (transferred in step (b1)) may be a wire section that does not completely extend from a wire guide roller to another wire guide roller (i.e. the length of that wire section may be shorter that the distance between the wire guide rollers supporting the wire web).

The wording "deflection direction that has a directional component extending parallel to the rotation axes of the wire guide rollers" comprises the meanings, that (1) the deflection direction (as such) may be essentially parallel to the rotation axes of the wire guide rollers or (2) the deflection direction has further directional components pointing in other directions, preferably in radial direction of a wire guide roller so that wire segments are lifted from that wire guide roller and thus can be displaced more readily.

The wire saw may be used to cut wafers e.g. from bricks. Under the term "wafer" any flat object is understood. The bricks may be formed from semiconductor material, sapphire, rare earth metals, quartz, etc. Typically, such materials are cut with fixed abrasive wire such as diamond wire. Slurry based cutting processes are known as well.

The wire web formed on the wire saw may comprise a plurality of wire sections, e.g. 1000 to 3000. Usually the thickness of the wafers is <200 µm, preferably <150 µm, e.g. 100 µm. Usually the thickness (outer diameter) of the cutting wire is <200 µm, preferably <100 µm, e.g. 80 µm. The pitch of the grooves formed on the wire guide rollers corresponds to the thickness of the cut wafers and the thickness of the cutting wire. The pitch may vary slowly over the length of the wire guide rollers to compensate for the wear of the wires. Wire web portions may also have different pitch.

Preferably, step (b2) comprises: deflecting at least one wire section, preferably at least two wire sections simultaneously, in a deflection direction that has a directional component extending parallel to the rotation axes of the wire guide rollers, and rotating the wire guide rollers, such that the at least one deflected wire section moves into the free groove of the second wire guide roller. Step (b2) is thus of similar type as step (b1) and even allows to automate the process. The same tool(s) may be used for both steps.

In the case that the wire saw comprises more than two wire guide rollers, e.g. three or four, similar steps as step (b2) are performed with respect to each further wire guide roller, in order to achieve an uniform gap around all wire guide rollers.

Preferably, one of the at least two wire sections transferred in step (b1) is an end portion of the cutting wire that is connected, preferably temporarily, with the neighboring wire section, preferably by an adhesive or adhesive tape. This allows to wind up the cutting wire in an elegant way. In a first step the cutting wire is wound in one loop to the wire guide rollers; in a second step the end portion of the cutting wire is connected to the neighboring wire section; and in a third step the cutting wire is wound up to the wire guide rollers by rotating the wire guide rollers. As already mentioned above the wire section forming the end portion may be shorter than the distance between the wire guide rollers.

Preferably, the at least two wire sections deflected in step (b1) and the at least one wire section deflected in step (b2) extend within the same wire web, and wherein the rotation direction of the wire guide rollers in step (b1) is opposite to the rotation direction of the wire guide rollers in step (b2). A wire saw may form at least two wire webs: One of the wire webs is the cutting wire web that comes into contact with the bricks to be cut; the other wire web extends opposite (parallel when only two wire guide rollers are present) to the cutting wire web. If the wire sections that are deflected in steps (b1) and (b2) belong to the same wire web, the rotation direction of the wire guide rollers has to be opposite in step (b1) and (b2), in order to receive the wire sections within the new grooves.

It is preferred that the at least one wire section transferred in step (b2) is one of the at least two wire segments transferred in step (b1).

In an alternative embodiment, the at least two wire sections deflected in step (b1) and the at least one wire section deflected in step (b2) extend within different wire webs that are distanced by the wire guide rollers, and/or wherein the rotation direction of the wire guide rollers in step (b1) and the rotation direction of the wire guide rollers in step (b2) may be the same or opposite. Here, the deflected wire sections belong to different wire webs (cutting wire web and opposite wire web).

Preferably, the deflection direction has a directional component that is perpendicular to the plane of the wire web and facing away from the wire guide rollers. With this method the wire sections may be slightly moved out from their actual grooves. The wire sections may by e.g. slightly elevated.

Preferably, in step (b1) and in step (b2) at least two, preferably at least four, more preferred at least eight neighboring wire sections are transferred from their actual grooves into other grooves and/or wherein the respective distances between the neighboring wire sections is kept constant. This allows to transfer more wire sections in one step. Here, it becomes further possible to form the gap not directly at the edge region of the wire web portion.

Preferably, in step (b1) the wire sections are transferred simultaneously and, preferably, in step (b2) the wire sections are transferred simultaneously. The method may be efficiently shortened in time.

Preferably, wire sections of the wire web portion that are not transferred in step (b) and that are close to the gap are connected, preferably temporarily, with each other, preferably by an adhesive or adhesive tape. The connection between at least two wire sections running on one side of the gap results in the fact, that the gap moves along the wire guide roller when the cutting wire is further wound onto the wire guide rollers.

Preferably, step (b1) and/or step (b2) is/are performed by means of a transferring tool. This embodiment allows to automate the process and prevents the wire sections from damages during the transfer. The method further becomes faster and more reproducible.

Preferably, the transferring tool is in cooperation with a drive, that moves the transferring tool in the deflection direction. Here, the process may be completely automated.

Preferably, the transferring tool has a comb-like structure, wherein the comb-like structure is engaged with the wire sections to be transferred, such that - when transferring - each wire section is received within a separate gap between two neighboring teeth of the comb-like structure. This is a particularly preferred embodiment: The comb like structure may be produced by partially cutting a block of material in the wire web of a wire saw.

The object of the invention is also achieved by a transferring tool for transferring at least one wire section, preferably for transferring simultaneously at least two wire sections, of a wire web from its actual groove(s) into free groove(s) of wire guide rollers of a wire saw, wherein the transferring tool has an engagement portion for engaging with the at least one wire section.

Preferably, the engagement portion has a comb-like structure, preferably for receiving different wire sections within a separate gap between two neighboring teeth of the comb-like structure. Preferably, the comb-like structure has lands with a pitch smaller than 400 µm, even more preferably smaller than 300 µm.

Preferably, the pitch of the comb-like structure is essentially identical to the pitch (between neighboring wire sections) of the wire web.

Preferably, the engagement portion is formed by a gripper for gripping at least one wire section, the gripper preferably being made from a material that is softer than the material of the wire.

The object of the invention is also achieved by a wire saw for cutting wafers, comprising at least two rotatable wire guide rollers and a cutting wire running in multiple loops over the at least two wire guide rollers, wherein a wire web of multiple wire sections running essentially parallel to each other is formed, characterized in that the wire saw comprises a transferring tool according to the invention, wherein preferably the transferring tool is in cooperation with a drive for moving the transferring tool within the wire saw, and wherein preferably the wire saw comprises a controller for carrying out a method according to the invention.

Further embodiments of the invention are indicated in the figures and in the dependent claims. The list of reference marks forms part of the disclosure. The invention will now be explained in detail by the drawings. In the drawings:
- Fig. 1: shows a wire saw;
- Fig. 2a to 2l: show different phases of the disposing method;
- Fig. 3a to 3l: show different phases of the disposing method;
- Fig. 4a to 4b: show alternative embodiments of a transferring tool;
- Fig. 5: shows a preferred embodiment of a wire saw.

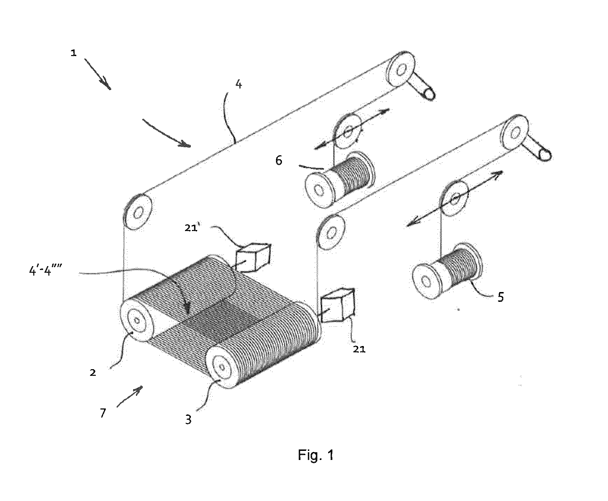

Fig. 1 shows a wire saw 1 having reservoir spools 5, 6 and wire guide rollers 2, 3. The cutting wire 4 is wound around wire guide 2, 3 rollers in multiple loops thereby forming wire web 7. Individual wire sections 4', 4", 4"' of the wire web 7 are indicated. The wire guide rollers 2, 3 are driven by drives 21, 21'.

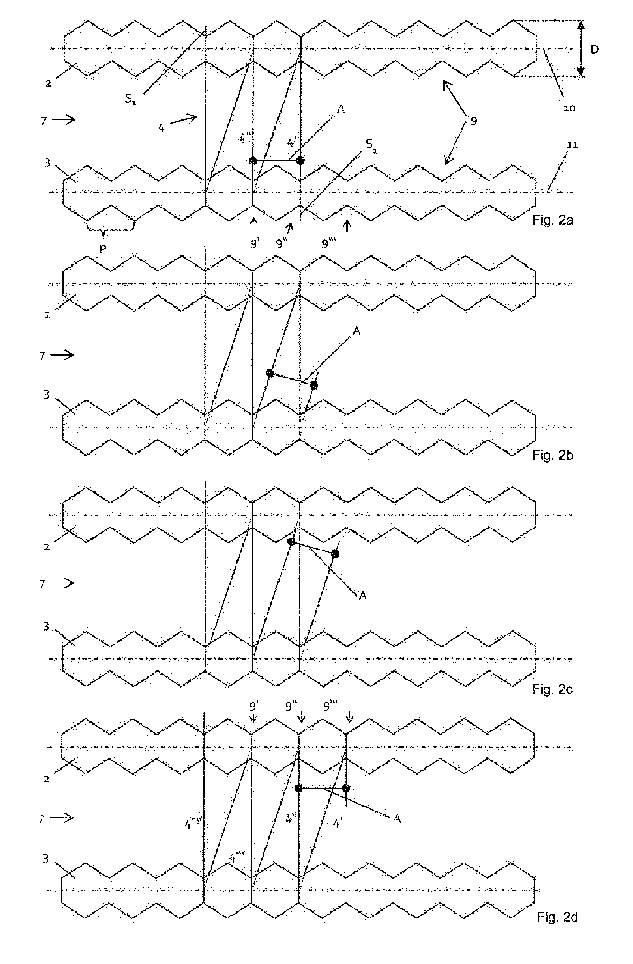

In the following the method will be described in more detail by means of the embodiment shown in Figs. 2a to 2i. The method is method of disposing a cutting wire 4 in multiple loops over at least two rotatable wire guide rollers 2, 3 of a wire saw 1, wherein a wire web is formed, and wherein the cutting wire 4 runs within grooves 9 formed on the wire guide rollers 2, 3.

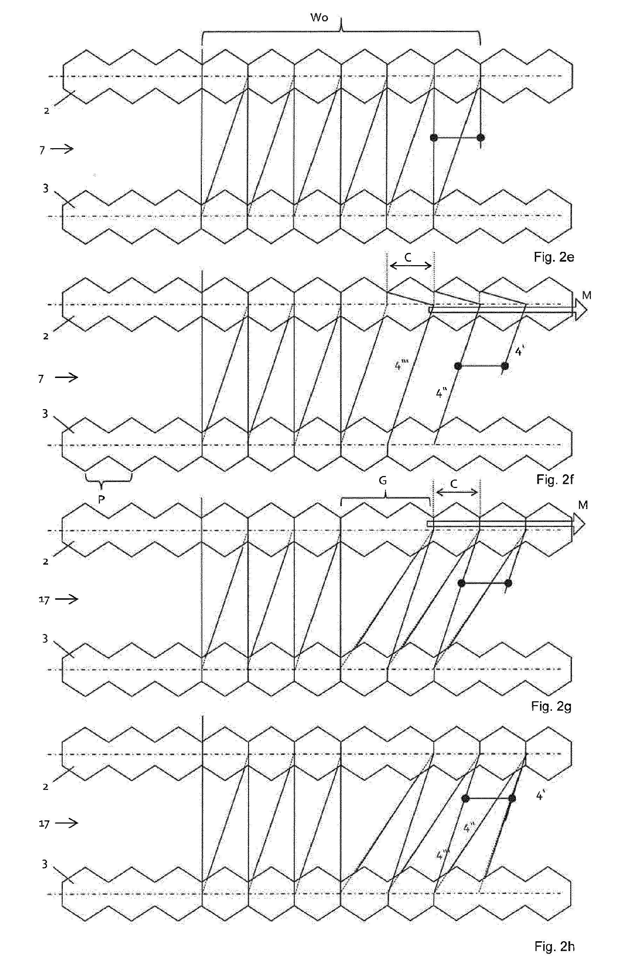

The method comprises the step of: (a) winding up the cutting wire 4 on the wire guide rollers 2, 3, preferably by rotating the wire guide rollers 2, 3, until a wire web portion W0 is formed (see Fig. 2e). Figs. 2a to 2d show that step (a) in detail: The outermost wire section 4' is an end portion of the cutting wire 4 (S₂ denotes to the end of the cutting wire 4) and is connected, preferably temporarily, with the neighbouring wire section 4", preferably by an adhesive or adhesive tape (the connection is indicated by reference sign A). Now, the wire guide rollers 2, 3 are rotated and the cutting wire 4 is wound up to the wire guide rollers (S₁ denotes the entrance point where cutting wire 4 is fed into the growing wire web).

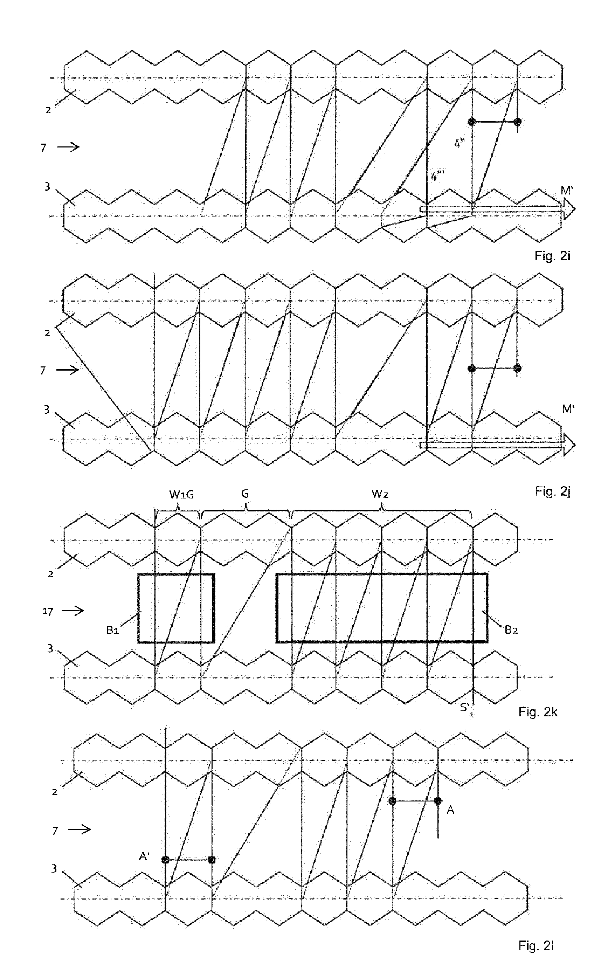

The method comprises the step of: (b) forming a gap G in the wire web portion W0, wherein the gap G is greater than the distance between two neighbouring grooves 9 of a wire guide roller 2, 3. In Fig. 2k a gap G has been formed between wire web portions W1 and W2.

Step (b) now comprises a step (b1) of transferring at least two (here: three) neighbouring wire sections 4', 4", 4"', that run along each other, from their actual grooves 9 in the first wire guide roller 2 into other (free) grooves 9 in the first wire guide roller 2. This is shown in Fig. 2f.

Step (b) also comprises a step (b2) of transferring at least one (here: two) wire section 4", 4'" from its actual groove 9 in the second wire guide roller 3 into another (free) groove 9 in the second wire guide roller 3. This is shown in Fig. 2i.

By means of steps (b1) and (b2) gap G is formed between the transferred wire sections 4', 4", 4'" and the wire sections remaining in their grooves 9.

Step (b1) as shown in the Figs. 2f and 2i comprises: deflecting simultaneously the neighbouring wire sections 4', 4", 4'" in a deflection direction M that has a directional component extending parallel to the rotation axes of the wire guide rollers 2, 3, and rotating the wire guide rollers 2, 3, such that the deflected wire sections 4', 4", 4"' move into the other (free) grooves 9 of the first wire guide roller 2.

Step (b2) as shown in Figs. 2i and 2j comprises: deflecting wire sections 4", 4'" in a deflection direction M' that has a directional component extending parallel to the rotation axes of the wire guide rollers 2, 3, and rotating the wire guide rollers 2, 3, such that the deflected wire sections 4", 4"' move into a free groove 9 of the second wire guide roller 3.

The wire sections 4", 4'" transferred in step (b2) are identical to two of the wire sections 4', 4", 4'" transferred in step (b1).

The method comprises subsequent to step (b) a step: (c) further winding up the cutting wire 4 (to the wire guide rollers) by rotating the wire guide rollers 2, 3. This is equivalent to the way the wire web is enlarged in figures 2a-2e. The result is shown in Fig. 2g. Here, two bricks B1 and B2 can be seen, wherein each brick is assigned to a wire web portion W1, W2.

In contrast to the method shown in Figs 2a to 2i the wire web portion may be split in the other direction. In that case the entrance point S₁ of the cutting wire 4 into the wire web 7 moves. Such a movement may be compensated by a moving pulley directing the cutting wire 4 towards the wire web 7 or by moving the wire web(s) on the wire guide rollers to compensate this displacement.

In the embodiment shown in Fig. 2 the wire sections 4', 4", 4'" deflected in step (b1) and wire sections 4", 4"' deflected in step (b2) extend within the same wire web. The rotation direction of the wire guide rollers 2, 3 in step (b1) is opposite to the rotation direction of the wire guide rollers 2, 3 in step (b2).

In an alternative embodiment the at least two wire sections 4', 4", 4"' deflected in step (b1) and the at least one wire section 4", 4'" deflected in step (b2) may extend within different wire webs that are distanced by (are on opposite sides of) wire guide rollers 2, 3. In that case, the rotation direction of the wire guide rollers 2, 3 in step (b1) and the rotation direction of the wire guide rollers 2, 3 in step (b2) may be the same or opposite, depending on what side of the wire web (close to what wire guide roller) the wires are displaced. In general the wire guide rollers are turned so that the displacement of the wire segments is moved onto the wire guide roller that needs to take over this displacement, normally being the wire guide roller closest to the displacement.

The deflection directions M, M' (Fig. 2f, g and 2i, j) may have an additional directional component that is perpendicular to the plane of the wire web and facing away from the wire guide rollers 2, 3.

It would be of course possible and preferred in step (b1) and in step (b2) to transfer at least two, preferably at least four, more preferred at least eight neighbouring wire sections 4', 4", 4'" from their respective actual grooves 9 into other (free) grooves 9, wherein the respective distances between the neighbouring wire sections 4', 4", 4'" is kept constant.

The embodiment of Fig. 2l shows the possibility after having formed the gap G to connect (see A') wire sections of the wire web portion W0 that are not transferred in step (b) and that are close to the gap G, preferably temporarily, with each other, preferably by an adhesive or adhesive tape. This allows that the gap G begins to move (in right hand side) when the wire guide rollers rotate.

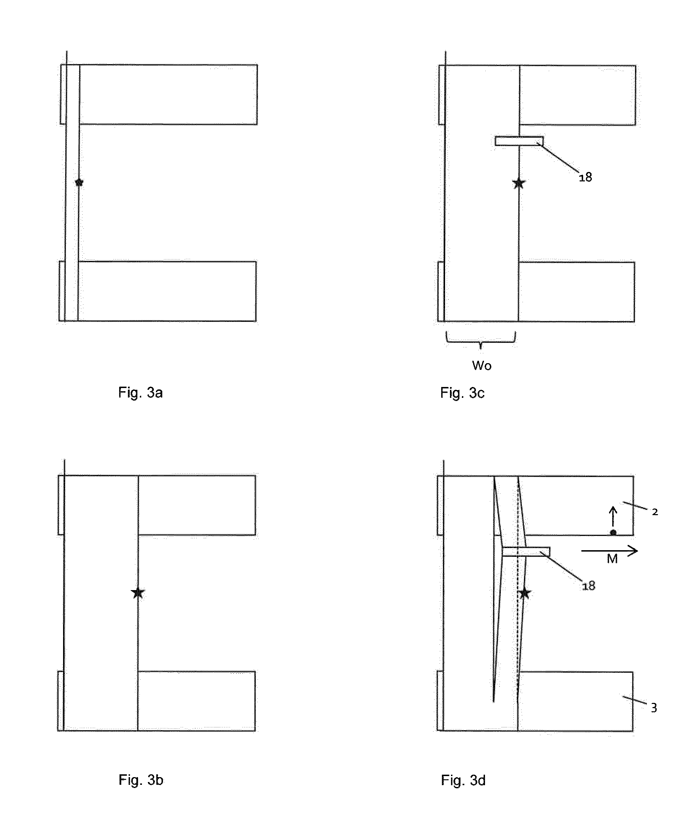

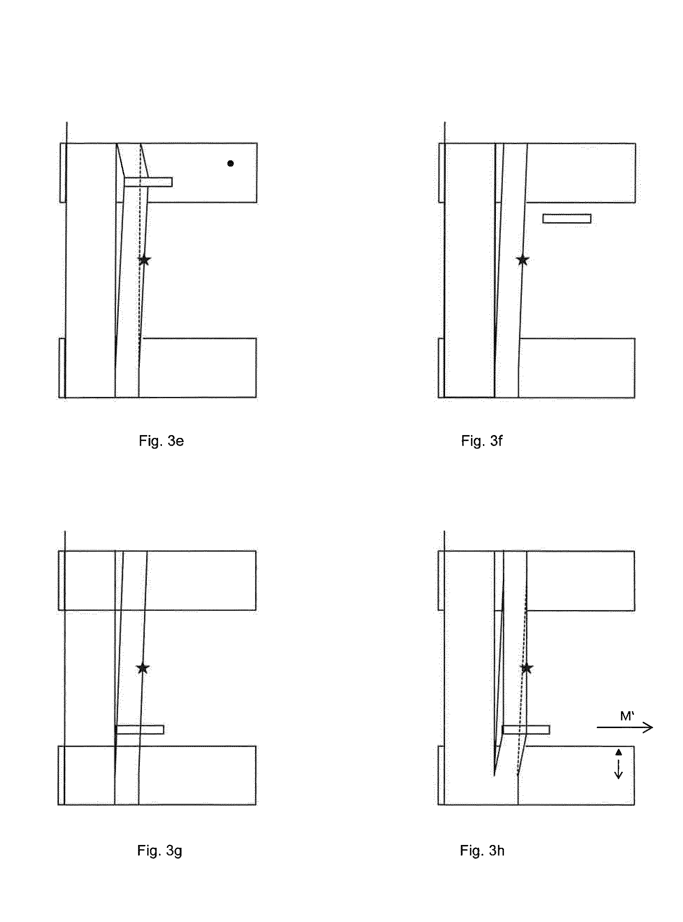

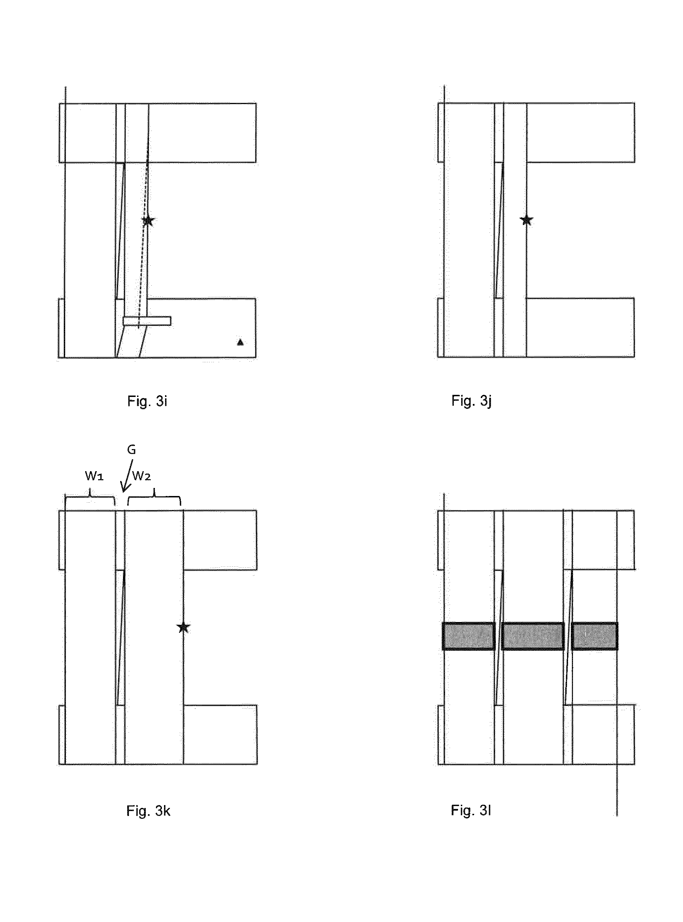

Fig. 3a to 3l show an embodiment where step (b1) as shown in Figs. 3c to 3f and step (b2) as shown in Figs. 3h to 3j are performed by means of a transferring tool 18. Fig. 3d and Fig. 3h show the step of rotating the wire guide rollers during the respective wire sections are deflected by the transferring tool 18.

Fig. 3l shows the possibility of splitting the wire web into a plurality of (here: three) wire web portions distanced from each other by gaps. In order to achieve such an arrangement the method steps of the invention have to be repeated to webs that already have been split.

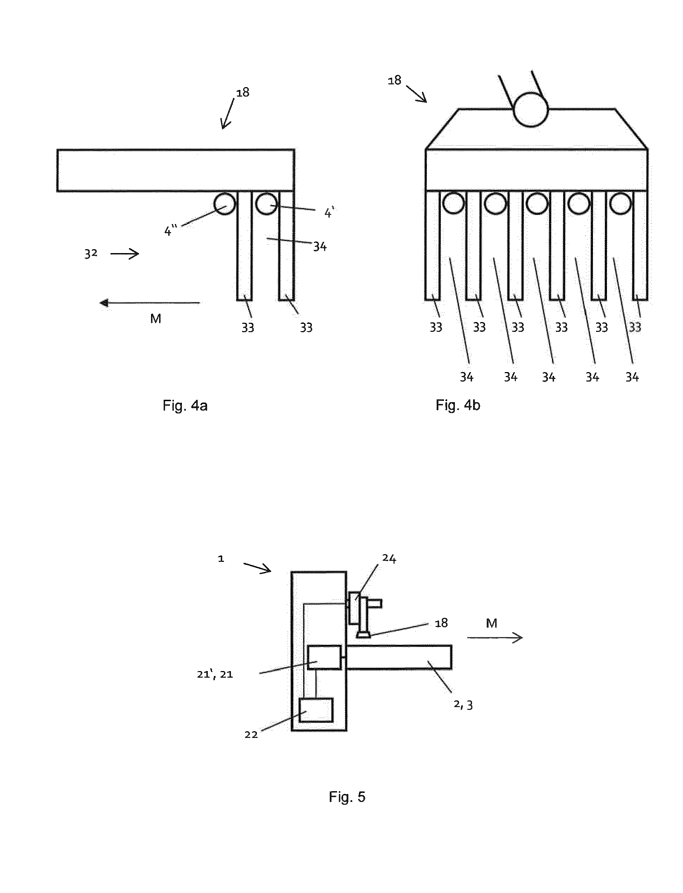

As can be seen from Fig. 4a and 4b the transferring tool 18 may have a comb-like structure, wherein the comb-like structure is engaged with the wire sections 4', 4" to be transferred, such that each wire section 4', 4" is received within a separate gap 34 between two neighbouring teeth 33 of the comb-like structure.

Alternatively, the engagement portion of the transferring tool may be formed by a gripper for gripping at least one wire section, the gripper preferably being made from a material that is softer than the material of the cutting wire 4.

As shown in Fig. 5, the transferring tool 18 may be in cooperation with a drive 24, that moves the transferring tool 18 in the deflection direction M, M' within the wire saw 1. The wire saw may comprise a controller 22 being in communication with the drive 24 for the transferring tool 18 and with the drives 21, 21' of the wire guide rollers 2, 3 in order to carry out a method according to the invention.

The invention is not restricted to these embodiments. Other variants will be obvious for the person skilled in the art and are considered to lie within the scope of the invention as formulated in the following claims. Individual features described in above specification, particularly with respect to the figures may be combined with each other to form other embodiments and/or applied mutatis mutandis to what is described in the claims and to the rest of the description.

### List of reference signs

- 1: wire saw
- 2: first wire guide roller
- 3: second wire guide roller
- 4: cutting wire
- 4', 4", 4'": wire sections
- 5: reservoir spool
- 6: reservoir spool
- 7: wire web
- 9: groove
- 10: rotation axes of the first wire guide roller
- 11: rotation axes of the second wire guide roller
- 18: transferring tool
- 21, 21': drive
- 22: controller
- 24: drive
- 33: tooth of the comb-like structure
- 34: gap of the comb like structure
- A, A': connection between neighboring wire sections
- B1, B2: brick
- G: gap
- M, M': deflection direction
- S1: entrance point of cutting wire 4
- S2: end of cutting wire 4
- W0: wire web portion
- W1, W2: wire web portion

## Claims

1. Method of disposing a cutting wire (4) in multiple loops over at least two rotatable wire guide rollers (2, 3) of a wire saw (1), wherein a wire web is formed, and wherein the cutting wire (4) runs within grooves (9) formed on the wire guide rollers (2, 3), the method comprising the steps of:
(a) winding up the cutting wire (4) on the wire guide rollers (2, 3), preferably by rotating the wire guide rollers (2, 3), until a wire web portion (W0) is formed;
(b) forming a gap (G) in the wire web portion (W0), wherein the gap (G) is greater than the distance between two neighboring grooves (9) of a wire guide roller (2, 3), wherein step (b) comprises a step (b1) of transferring at least two neighboring wire sections (4', 4", 4"'), that run along each other, wherein each of the at least two neighboring wire sections (4', 4", 4"') is transferred from its actual groove (9) in the first wire guide roller (2) into another groove (9) in the first wire guide roller (2) and a step (b2) of transferring at least one wire section (4", 4"') from its actual groove (9) in the second wire guide roller (3) into another groove (9) in the second wire guide roller (3), such that the gap (G) is formed between the transferred wire sections (4', 4", 4"') and the wire sections remaining in their grooves (9);
(c) subsequent to step (b): further winding up the cutting wire (4) by rotating the wire guide rollers (2, 3);
wherein step (b1) comprises: deflecting simultaneously the at least two neighboring wire sections (4', 4", 4"') in a deflection direction (M) that has a directional component extending parallel to the rotation axes of the wire guide rollers (2, 3), and rotating the wire guide rollers (2, 3), such that the at least two deflected wire sections (4', 4", 4"') move into the other grooves (9) of the first wire guide roller (2).

2. Method according to claim 1, wherein step (b2) comprises: deflecting at least one wire section (4", 4"'), preferably at least two wire sections (4", 4"') simultaneously, in a deflection direction (M') that has a directional component extending parallel to the rotation axes of the wire guide rollers (2, 3), and rotating the wire guide rollers (2, 3), such that the at least one deflected wire section (4", 4"') moves into a free groove (9) of the second wire guide roller (3).

3. Method according to claim 1 or 2, wherein one of the at least two wire sections (4') transferred in step (b1) is an end portion of the cutting wire (4) that is connected, preferably temporarily, with the neighboring wire section (4"), preferably by an adhesive or adhesive tape.

4. Method according to one of the claims 1 to 3, wherein the at least two wire sections (4', 4", 4"') deflected in step (b1) and the at least one wire section (4", 4"') deflected in step (b2) extend within the same wire web, and wherein the rotation direction of the wire guide rollers (2, 3) in step (b1) is opposite to the rotation direction of the wire guide rollers (2, 3) in step (b2).

5. Method according to one of the claims 1 to 3, wherein the at least two wire sections (4', 4", 4"') deflected in step (b1) and the at least one wire section (4", 4"') deflected in step (b2) extend within different wire webs that are distanced by the wire guide rollers (2, 3), and/or wherein the rotation direction of the wire guide rollers (2, 3) in step (b1) and the rotation direction of the wire guide rollers (2, 3) in step (b2) are the same.

6. Method according to one of the preceding claims, wherein the deflection direction (M, M') has a directional component that is perpendicular to the plane of the wire web and facing away from the wire guide rollers (2, 3).

7. Method according to one of the preceding claims, wherein in step (b1) and in step (b2) at least two, preferably at least four, more preferred at least eight neighboring wire sections (4', 4", 4"') are transferred from their actual grooves (9) into other grooves (9) and/or wherein the respective distances between the neighboring wire sections (4', 4", 4'") is kept constant.

8. Method according to one of the preceding claims, wherein wire sections of the wire web portion (W0) that are not transferred in step (b) and that are close to the gap (G) are connected, preferably temporarily, with each other, preferably by an adhesive or adhesive tape.

9. Method according to one of the preceding claims, wherein step (b1) and/or step (b2) is/are performed by means of a transferring tool (18).

10. Method according to claim 9, wherein the transferring tool (18) is in cooperation with a drive (24), that moves the transferring tool (18) in the deflection direction (M, M').

11. Method according to claim 9 or 10, wherein the transferring tool (18) has a comb-like structure, wherein the comb-like structure is engaged with the wire sections (4', 4", 4"') to be transferred, such that each wire section (4', 4", 4"') is received within a separate gap between two neighboring teeth of the comb-like structure.

12. Transferring tool for transferring at least one wire section, preferably for transferring simultaneously at least two wire sections (4', 4", 4"'), of a wire web portion (W0) from its actual groove(s) (9) into free groove(s) (9) of wire guide rollers (2, 3) of a wire saw (1), wherein the transferring tool (18) has an engagement portion for engaging with the at least one wire section (4', 4", 4"').

13. Transferring tool according to claim 12, wherein the engagement portion has a comb-like structure, preferably for receiving different wire sections (4', 4", 4'") within a separate gap between two neighboring teeth of the comb-like structure.

14. Transferring tool according to claim 12, wherein the engagement portion is formed by a gripper for gripping at least one wire section, the gripper preferably being made from a material that is softer than the material of the cutting wire (4).

15. Wire saw (1) for cutting wafers, comprising at least two rotatable wire guide rollers (2, 3) and a cutting wire (4) running in multiple loops over the at least two wire guide rollers (2, 3), wherein a wire web of multiple wire sections (4', 4", 4"') running essentially parallel to each other is formed, **characterized in that** the wire saw (1) comprises a transferring tool (18) according to one of the claims 12 to 14, wherein preferably the transferring tool (18) is in cooperation with a drive (24) for moving the transferring tool (18) within the wire saw (1), and wherein preferably the wire saw (1) comprises a controller (22) for carrying out a method according to one of the claims 1 to 11.
